(19) Europäisches Patentamt
European Patent Office
Office européen des brevets

(11) Veröffentlichungsnummer: **0 006 204**
**B1**

(12) **EUROPÄISCHE PATENTSCHRIFT**

(45) Veröffentlichungstag der Patentschrift: **28.07.82**

(21) Anmeldenummer: **79101863.3**

(22) Anmeldetag: **11.06.79**

(51) Int. Cl.³: **C 08 G 18/08**, C 08 F 8/44, C 08 G 18/83, C 08 G 85/00, C 09 D 3/72, C 09 D 5/02, C 09 J 3/14, C 09 J 3/16

(54) **Wässrige Dispersionen von oligomeren oder polymeren Kunststoffen, ein Verfahren zu ihrer Herstellung sowie ihre Verwendung.**

(30) Priorität: **21.06.78 DE 2827156**

(43) Veröffentlichungstag der Anmeldung: **09.01.80 Patentblatt 80/1**

(45) Bekanntmachung des Hinweises auf die Patenterteilung: **28.07.82 Patentblatt 82/30**

(84) Benannte Vertragsstaaten: **AT BE DE FR GB IT NL SE**

(56) Entgegenhaltungen:
**FR-A-2 347 420**
**GB-A-1 501 769**
**US-A-3 480 592**

(73) Patentinhaber: **BAYER AG, Zentralbereich Patente, Marken und Lizenzen, D-5090 Leverkusen 1, Bayerwerk (DE)**

(72) Erfinder: **Wenzel, Wolfgang, Dr., Peter-Landwehr-Strasse 13, D-5060 Bergisch-Gladbach 2 (DE)**
Erfinder: **Meckel, Walter, Dr., Zonser Strasse 9, D-4040 Neuss (DE)**

**EP 0 006 204 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wässrige Dispersionen von oligomeren oder polymeren Kunststoffen, ein Verfahren zu ihrer Herstellung sowie ihre Verwendung

Die vorliegende Erfindung betrifft neue wässrige Dispersionen von Kunststoffen, welche durch eine einfache Wärmebehandlung in wasserresistente Kunststoffe überführt werden können, ein Verfahren zu ihrer Herstellung, sowie ihre Verwendung zur Herstellung von wasserresistenten Überzügen, Beschichtungen und Verklebungen.

Die Herstellung von stabilen, wässrigen Kunststoffdispersionen gehört zum bekannten Stand der Technik.

So wird beispielsweise in DE-PS 1 178 586, DE-PS 1 184 946, DE-OS 1 495 745, DE-OS 1 770 068, DE-OS 2 314 512, DE-OS 2 446 440, DE-OS 2 543 091, DE-OS 2 642 073, US-PS 3 480 592, US-PS 3 388 087, US-PS 3 479 310, US-PS 3 756 992, US-PS 3 905 929 oder in «Angewandte Chemie» *82,* 53ff (1970) die Herstellung von gegebenenfalls Harnstoffgruppen aufweisenden Polyurethandispersionen bzw. -lösungen beschrieben.

Die Herstellung von wässrigen oder wasserverdünnbaren, gegebenenfalls organische Lösungsmittel und gegebenenfalls Urethangruppen aufweisenden Polykondensaten insbesondere Polyesterharzen gehört ebenfalls zum bekannten Stand der Technik (vgl. z.B. DE-OS 2 225 646, DE-AS 2 239 094, DE-OS 2 446 439, US-PS 3 876 582, US-PS 4 029 617, vgl. auch Houben-Weyl «Methoden der organischen Chemie» XIV/2 (1963) Seiten 30ff).

Auch die Herstellung von eingebaute ionische Gruppen aufweisenden Polymerisaten, insbesondere Polyacrylaten, gehört zum bekannten Stand der Technik (vgl. z.B. Houben-Weyl «Methoden der organischen Chemie» XIV/1 (1961) Seiten 1033ff. oder XIV/2 (1963) Seite 754).

Alle Verfahren zur Herstellung derartiger Dispersionen beruhen auf dem Prinzip, in eine makromolekulare Kette eines Polymeren hydrophile Zentren einzubauen. Diese hydrophilen Zentren oder sogenannten inneren Emulgatoren sind in den bekannten Dispersionen ionische Gruppen oder Ätherfunktionen. Diese Zentren werden zumeist entweder in Form spezieller Diole oder modifizierter Amine beim Aufbau des Polymeren eingeführt.

Bei kationischen wässrigen Systemen wird in der Regel ein basisches Stickstoffatom in die Polymerkette eingebaut, das durch Quaternierung oder durch Neutralisation mit einer organischen oder anorganischen Säure in die Salzform überführt wird.

Die bekannten kationischen Dispersionen sind jedoch häufig mit schwerwiegenden Nachteilen behaftet. Einerseits können die im Polymeren verbleibenden ionischen Gruppen ganz erheblich dessen Nassfestigkeit beeinträchtigen. Andererseits zerstören die beim Einbrennen freiwerdenden anorganischen oder organischen Säuren oder deren korrosiven Zersetzungsprodukte in vielen Fällen durch Korrosion die bei der Verwendung der Dispersionen eingesetzten Beschichtungs- oder Tauchanlagen. Zu nennen sind hier insbesondere Salz- und Essigsäure.

Eine interessante Umgehung dieses Problems wird in der DE-OS 2 460 470 vorgeschlagen, indem das basische Stickstoffatom unter Verwendung von Kohlendioxid in wässriger Phase in die Salzform überführt wird und so als Emulgator für das Polymer dient.

Dieses Verfahren hat aber zwei gravierende Nachteile:

1. Es müssen Pulver eingesetzt werden oder aber organische Lösungsmittel verwendet werden, um das Polymere homogen zu lösen.

2. Die entstehenden Dispersionen sind auf Grund der schwachen Acidität der verwendeten Säure nur sehr begrenzt lagerstabil. Nach wenigen Tagen sedimentieren nach diesem Verfahren hergestellte Dispersionen.

Aufgabe der Erfindung war es nun, lagerstabile Dispersionen von kationischen Polymeren, die zu ionenfreien, hydrophoben, d.h. wasserresistenten Beschichtungen, Verklebungen und Überzügen führen, zur Verfügung zu stellen.

Durch die vorliegende Erfindung werden nunmehr erstmals lagerstabile wässrige Dispersionen von ionischen Kunststoffen zur Verfügung gestellt, die beim Erwärmen, d.h. während und/oder nach der Applikation der Dispersion ihren Ionencharakter verlieren, ohne dass gleichzeitig korrodierend wirkende Säuren oder sonstige Spaltprodukte abgespalten würden. Das neue erfindungsgemässe Prinzip besteht darin, dass man obligo- oder polymere Kunststoffe mit tertiären Stickstoffatomen mit solchen Säuren in die wasserlösliche oder -dispergierbare Salzform überführt, die beim Erwärmen ihre Säurefunktion ohne Abspaltung von korrodierend wirkenden Spaltprodukten verlieren, bzw. darin, dass man zum Aufbau der Kunststoffe niedermolekulare Aufbaukomponenten mitverwendet, welche durch Umsetzung von tertiären Aminfunktionen mit derartigen Säuren erhaltene Ammoniumgruppen aufweisen.

Gegenstand der vorliegenden Erfindung sind somit wässrige Dispersionen von 2 bis 200 Milliäquivalente pro 100g Feststoff an eingebauten, durch Neutralisation von eingebauten tertiären Stickstoffatomen mit organischen Säuren erhaltenen, Ammoniumgruppen aufweisenden Oligo- oder Polymerisaten, -kondensaten oder -additionsprodukten, dadurch gekennzeichnet, dass die den Ammoniumgruppen zugrundeliegende organische Säure nach Entfernung des Wassers in einem Temperaturbereich von 20–200°C ihren Säurecharakter verliert und ausgewählt ist aus der Gruppe, bestehend aus den Säuren der Formeln

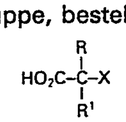

$HO_2C-CO_2R^2$

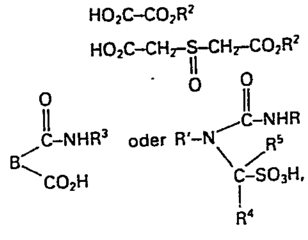

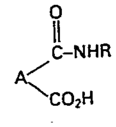

oder

wobei

R, $R^1$, $R^4$ und $R^5$ für gleiche oder verschiedene Reste stehen und Wasserstoff, einen gegebenenfalls Halogen- oder Hydroxylsubstituenten aufweisenden Alkylrest mit 1 bis 4 Kohlenstoffatomen oder einen gegebenenfalls derartige Substituenten aufweisenden Arylrest mit 6 bis 10 Kohlenstoffatomen bedeuten,

$R^2$ für einen Alkylrest mit 1 bis 4 Kohlenstoffatomen steht,

$R^3$ für einen gegebenenfalls Halogen- oder Hydroxylsubstituenten aufweisenden Alkylrest mit 1 bis 4 Kohlenstoffatomen oder einen gegebenenfalls derartige Substituenten aufweisenden Phenylrest steht,

X für $-NO_2$, $-CN$ oder $-CO-R^6$ steht,

$R^6$ für $R^3$, $-N(R)R^1$, $-CH_2-CO_2H$ oder $-OR^3$ steht,

A für eine 2 oder 3 Kohlenstoffatome aufweisende, gegebenenfalls Hydroxylsubstituenten aufweisende Brücke steht, welche einen Alkylenrest darstellt oder Teil eines gegebenenfalls Hydroxylsubstituenten aufweisenden aromatischen Ringsystems mit 6 bis 10 Kohlenstoffatomen oder Teil eines gegebenenfalls olefinisch ungesättigten cycloaliphatischen Ringsystems mit 5 bis 12 Kohlenstoffatomen sein kann, oder für $-CH_2-Z-CH_2-$ steht, wobei Z Sauerstoff oder Schwefel bedeuten kann,

B für $-D-Y-$ steht, wobei

D für eine 1 bis 4 Kohlenstoffatome aufweisende, gegebenenfalls Hydroxylsubstituenten aufweisende Brücke steht, die auch Teil eines gegebenenfalls Hydroxylsubstituenten aufweisenden aromatischen Ringsystems oder Teil eines gegebenenfalls olefinisch ungesättigten cycloaliphatischen Ringsystems mit 5 bis 12 Kohlenstoffatomen sein kann, und

Y für $-NR-$, $-O-$ oder $-S-$ steht.

Gegenstand der vorliegenden Erfindung ist auch ein Verfahren zur Herstellung von derartigen wässrigen Dispersionen durch an sich bekannten Aufbau oligomerer oder polymerer Kunststoffe durch Polymerisation, Polykondensation oder Polyaddition niedermolekularer Aufbaukomponenten unter Mitverwendung von tertiären Aminstickstoff aufweisenden und/oder durch Neutralisation von eingebauten tertiären Aminogruppen mit organischen Säuren erhaltene Ammoniumgruppen aufweisenden Aufbaukomponenten, zumindest teilweiser Neutralisation der gegebenenfalls vorliegenden tertiären Aminogruppen mit einer organischen Säure, wobei Art und Menge der tertiäre Aminogruppen und/oder Ammoniumgruppen aufweisenden Aufbaukomponenten, sowie der Neutralisationsgrad so gewählt werden, dass in den entstehenden Oligomeren bzw. Polymeren 2 bis 200 Milliäquivalente pro 100 g Feststoff Ammoniumgruppen vorliegen, und an sich bekannte Überführung der Oligomeren oder Polymeren in eine wässrige Dispersion während der im Anschluss an die zum Oligomeren oder Polymeren führende Aufbaureaktion, dadurch gekennzeichnet, dass man zur Neutralisation der tertiären Aminogruppen und/oder zur Herstellung der Ammoniumgruppen aufweisenden Aufbaukomponenten organische Säuren der genannten Art verwendet.

Gegenstand der vorliegenden Erfindung ist auch die Verwendung der erfindungsgemässen wässrigen Dispersionen zur Herstellung von wasserresistenten Überzügen, Beschichtungen oder Verklebungen auf bzw. von beliebigen Substraten, dadurch gekennzeichnet, dass man die Dispersionen nach erfolgter Formgebung während und/oder nach dem Entfernen des Wassers durch Verdunsten oder Verdampfen einer Lagerung oder Wärmebehandlung im Temperaturbereich von 20 bis 200° C unterzieht.

Das neue erfindungswesentliche Prinzip der Verwendung von in der Wärme ihre Säurefunktion verlierenden Säuren bei der Überführung von tertiären Aminogruppen in hydrophile Ammoniumgruppen ist auf alle Kunststoffe anwendbar. Dies bedeutet, dass sowohl Polyadditionsprodukte wie z. B. Polyurethane, Polyharnstoffe oder Polyalkylenoxide; Polykondensationsprodukte wie z. B. Polyester, Polyamide oder Polycarbonate oder Polymerisationsprodukte wie z. B. Polyacrylate nach dem erfindungsgemässen Prinzip modifiziert werden können. Wesentlich ist lediglich, dass die genannten Polymeren eine genügende Menge an basischen insbesondere tertiären Stickstoffatomen in chemisch eingebauter Form aufweisen, die dann durch Neutralisation mit den erfindungswesentlichen Säuren in hydrophile Ammoniumgruppen überführt werden können, um so die Dispergierbarkeit der Polymeren in Wasser zu gewährleisten und/oder dass bereits beim Aufbau der Polymeren Ammoniumgruppen aufweisende Ausgangsmaterialien in einer die Dispergierbarkeit in Wasser gewährleistenden Menge mitverwendet werden, wobei die Ammoniumgruppen aufweisenden Aufbaukomponenten Neutralisationsprodukte von tertiären Aminstickstoff aufweisenden Aufbaukomponenten mit den erfindungswesentlichen Säuren darstellen. Die Neutralisation der tertiären Aminfunktion kann somit vor oder auch im Anschluss an die Herstellung der Polymeren erfolgen. Grundsätzlich denkbar ist jedoch auch eine Ausführungsform bei welcher in einem Eintopf-Verfahren der Aufbau des Polymeren und die Neutralisation der tert. Aminfunktion in situ, d. h. gleichzeitig dergestalt erfolgt, dass tert. Aminogruppen aufweisende Aufbaukomponenten und erfindungswesentliche Säuren gleichzeitig bei der zum Polymeren führenden Aufbaureaktion eingesetzt werden.

Im allgemeinen handelt es sich bei den in den erfindungsgemässen wässrigen Dispersionen vorliegenden Kunststoffen um hochmolekulare, d. h. ein Molekulargewicht von über 20 000 aufweisenden Polymere. Das erfindungsgemässe Verfahren ist jedoch auch auf vergleichsweise niedermolekulare und deshalb besser als «Oligomere» zu bezeichnende Kunststoffe eines Molekulargewichts von ca. 1000 bis 20 000 anwendbar. Nachstehend steht somit der Begriff «Polymere» sowohl für echte, d. h. hochmolekulare Polymere

als auch für derartige, vergleichsweise niedermolekulare Oligomere.

Bei der Durchführung des erfindungsgemässen Verfahrens wird nach den an sich bekannten Methoden des Standes der Technik vorgegangen. Dies bedeutet im Falle der erfindungsgemäss bevorzugten wässrigen Dispersionen von Polyurethanen bzw. Polyurethan-polyharnstoffen, dass der Aufbau des Makromoleküls durch Umsetzung von organischen Diisocyanaten mit im Sinne der Isocyanatpolyadditionsreaktion difunktionellen Aufbaukomponenten mit gegenüber Isocyanatgruppen reaktionsfähigen Wasserstoffatomen gegebenenfalls unter Mitverwendung untergeordneter Mengen an im Sinne der Isocyanat-Polyadditionsreaktion monofunktionellen oder höher als difunktionellen Aufbaukomponenten nach den bekannten Methoden des Standes der Technik erfolgt, wie sie beispielsweise in den oben bei der Würdigung des Standes der Technik angeführten Literaturstellen, insbesondere in US-PS 3 756 992, US-PS 3 497 310, DE-OS 2 623 962 oder DE-OS 2 637 690 beschrieben sind, wobei die in diesen Literaturstellen beispielhaft genannten Ausgangsmaterialien zum Einsatz gelangen, und wobei vorzugsweise beim Aufbau der Makormoleküle tertiären Aminstickstoff aufweisende Aufbaukomponenten vorzugsweise über Hydroxyl- und/oder primäre oder sekundäre Aminogruppen enthaltende tert. Amine eingebaut werden. Der erfindungswesentliche Schritt, die Neutralisation dieser tert. Aminogruppen mit den erfindungswesentlichen Säuren, erfolgt vorzugsweise im Anschluss an den Aufbau des Makromoleküls vor oder während des Dispergier- bzw. Lösungsvorgangs. Geeignete tert. Aminogruppen aufweisende Aufbaukomponenten sind beispielsweise in US-PS 3 479 310, Kolonne 4, Zeilen 10–62 beschrieben. Prinzipiell wäre es auch denkbar, beim Aufbau der Polyadditionsprodukte gleich zu Beginn die Neutralisationsprodukte der beispielhaft genannten tert. Aminogruppen aufweisenden Aminoalkohole mit den erfindungswesentlichen Säuren einzusetzen, obwohl ein derartiges Vorgehen weniger bevorzugt ist.

Zu der Gruppe der Polyadditionsprodukte, welche nach dem erfindungsgemässen Verfahren ebenfalls in erfindungsgemässe wässrige Dispersionen überführt werden können, gehören auch Polyalkylenoxide, wie sie in an sich bekannter Weise durch Anlagerung von Alkylenoxiden an Aminstickstoff aufweisende Startermoleküle mit mindestens einem vorzugsweise mindestens zwei aktiven, zur Anlagerung vor Alkylenoxiden befähigten Wasserstoffatomen erhalten werden können. Zu derartigen Polyäthern gehören beispielsweise die Alkoxylierungs- vorzugsweise Propoxylierungsprodukte von Ammoniak, Äthylamin, Triäthanolamin oder Äthylendiamin, die nach zumindest teilweiser Neutralisation der tert. Stickstoffatome mit den erfindungswesentlichen Säuren in erfindungsgemässe Dispersionen oder Lösungen überführt werden können.

Zu den Polykondensaten, welche mit dem erfindungsgemässen Verfahren in erfindungsgemässe Dispersionen überführt werden können gehören insbesondere Polyesterharze, deren Herstellung beispielsweise in Houben-Weyl 14/2, Seiten 30ff. beschrieben ist. Einzige Voraussetzung ist erneut das Vorliegen von mit den erfindungswesentlichen Säuren neutralisierbaren tertiären Stickstoffatomen, welche in die nach bekannten Methoden des Standes der Technik hergestellten Polyester durch Mitverwendung von tert. Stickstoff aufweisenden Ausgangsmaterialien vorzugsweise tert. Stickstoff aufweisenden Alkanolaminen wie z.B. N-Methyldiäthanolamin oder Triäthanolamin eingebaut werden. Vorzugsweise wird man bei der Polyesterherstellung auf den Einsatz freier Säuren verzichten, um eine Salzbildung mit den tert. Stickstoff aufweisenden Ausgangsmaterialien zu verhindern. Statt dessen wird man bevorzugt niedrige Ester der zur Herstellung der Polyester erforderlichen Polycarbonsäuren wie z.B. Adipinsäuredimethylester, Maleinsäuredimethylester, Phthalsäuredimethylester oder Ester anderer niederer Alkohole zum Einsatz bringen. Auch nach beliebigen Verfahren des Standes der Technik hergestellte Polycarbonate oder Polyamide stellen Polykondensate dar, die, sofern sie tert. Aminstickstoffatome in chem. eingebauter Form enthalten, nach dem erfindungsgemässen Prinzip in erfindungsgemässe Dispersionen oder Lösungen überführt werden können.

Zu den Polymerisaten, welche mit Hilfe des erfindungsgemässen Verfahrens in erfindungsgemässe wässrige Dispersionen überführt werden können, gehören insbesondere Poly(meth)acrylate, deren Herstellung z.B. in Houben-Weyl XIV/1, Seiten 1033ff. beschrieben ist.

Zur Einführung der tert. Stickstoffatome in die nach bekannten Verfahren herzustellenden Polymerisate verfährt man nach dem, in Houben-Weyl XIV/2 Seite 754 offenbarten Prinzip, d.h. unter Mitverwendung von tert. Aminstickstoff aufweisenden, olefinisch ungesättigten Comonomeren wie z.B. N,N-Dimethyl-2-aminoäthyl-acrylat. Als weitere Ausgangskomponenten kommen selbstverständlich alle in der Polyacrylatchemie üblichen, olefinisch ungesättigten Monomeren wie z.B. Styrol, Acrylnitril, Äthylen, Propylen oder Butadien in Betracht.

Erfindungsgemäss können somit beliebige oligomere bzw. polymere Kunststoffe in erfindungsgemässe wässrige Dispersionen oder Lösungen überführt werden. Voraussetzung hierzu ist lediglich, dass in den Kunststoffen mit den erfindungswesentlichen Säuren neutralisierbare, vorzugsweise aliphatisch substituierte, tert. Aminstickstoffatome vorliegen, welcher ihrerseits vorzugsweise unter Mitverwendung von tert. Aminstickstoff aufweisenden Aufbaukomponenten in den Kunststoff eingeführt werden. Diese Aufbaukomponenten weisen je nach chemischer Natur der Kunststoffe neben den tert. Aminstickstoffatomen reaktionsfähige Zentren, d.h. aktive Wasserstoffatome in Form von primären oder sekundären Aminogruppen oder in Form von Hydroxylgruppen oder polymerisationsfähige Doppelbindungen auf. Bei der Herstellung von erfindungsgemässen Polyurethan-Polyharnstoff-Dispersionen ist es auch möglich, tert. Aminstickstoff aufweisende Aufbaukomponenten mitzuverwenden, welche erst unter dem Einfluss des als Dispergiermedium eingesetzten Wassers gegenüber Isocyanatgruppen reaktionsfähige Gruppen bilden. Zu dieser Gruppe von Verbindungen gehören beispielsweise tert. Aminstickstoff aufweisende Aldimine, Ketimine oder Enamine, die unter dem Einfluss von Wasser in freie primäre und/oder sekundäre Aminogruppen aufweisende tert. Amine gespalten werden. Bei Verwendung derartiger Aufbaukomponenten bei der Durchführung des erfindungsgemässen Verfahrens empfiehlt sich eine Ausführungsform, welche darin besteht, ein in an sich bekannter Weise hergestelltes NCO-Präpolymer mit vorzugsweise zwei endständigen Isocyanatgruppen mit einer geeigneten Menge einer derartigen Aufbaukomponente zu vermischen, um anschliessend dieses Gemisch in Wasser einzutragen. Vorzugsweise ist hierbei die erfindungswesentliche Säure im Wasser gelöst, sie kann jedoch auch nach intensivem Durchmischen des erstgenannten Gemisches mit dem Wasser der wässrigen Phase zugeführt werden, um so zu einer erfindungsgemässen Dispersion oder Lösung zu gelangen.

Zu den tert. Stickstoff aufweisenden Ausgangsverbindungen gehören somit

1. N-Alkyl-N,N-bis(amino-alkyl)amine, wie z.B. N-Methyl-N,N-bis-(2-aminoäthyl)-amin; N-Methyl-N,N-bis(2-aminopropyl)-amin; N,N-Bis-(3-aminopropyl)-cyclohexylamin; N,N',N''-Trimethyldiäthylentriamin sowie deren Umsetzungsprodukte mit Aldehyden und/oder Ketonen ggf. unter Wasserabspaltung zu Aldiminen, Ketiminen oder Enaminen, wie sie beispielsweise in Houben-Weyl, Methoden der organischen Chemie, Band XI/2, 73ff beschrieben werden.

2. Hoch- oder niedermolekulare, d.h. ein Molekulargewicht von ca. 89–10 000 vorzugsweise 89–300 aufweisende, Hydroxylverbindungen mit tertiären Stickstoffatomen wie beispielsweise alkoxylierte aliphatische, cycloaliphatische, aromatische oder heterocyclische primäre und/oder sekundäre Amine wie z.B. N,N-Dimethylaminoäthanol; N,N-Dimethylaminopropanol-(2); N-Methyl-N-β-hydroxyäthyl-anilin, N-Oxäthylmorpholin; N-Methyl-diäthanolamin; N-Butyl-diäthanolamin; N-Cyclohexyl-diisopropanolamin; polyalkoxyliertes N-Methyldiäthanolamin; Triäthanolamin; sowie die Alkoxylierungsprodukte von Alkylaminen, Dialkylaminen oder von Ammoniak.

3. Polymerisationsfähige Verbindungen mit basischen Stickstoffatomen, wie z.B. N,N-Dimethylaminoäthanolmethacrylat.

Prinzipiell ist es auch möglich, primäre und sekundäre Amine so einzubauen, dass sie später zur Salzbildung verwendet werden können. Hierbei tritt neben der Salzbildung auch Amidbildung auf. Daher ist diese Ausführungsform weniger bevorzugt.

Wie bereits dargelegt, ist es bei der Durchführung des erfindungsgemässen Verfahrens bevorzugt, zunächst ein tert. Stickstoff aufweisendes Polymer aufzubauen, um dieses anschliessend durch zumindest teilweise Neutralisation mit einer erfindungswesentlichen Säure in ein ionisches Polymer zu überführen, wobei diese Neutralisation im allgemeinen vor oder während des Dispergiervorganges erfolgt. In selteneren Fällen, wie beispielsweise bei der Verwendung von tert. Stickstoffatomen aufweisenden Aufbaukomponenten, welche erst unter dem Einfluss von Wasser die für ihren Einbau in das Polymere erforderlichen Reaktivgruppen bilden, kann die Neutralisation auch im Anschluss an den Dispergiervorgang erfolgen. Da jedoch vor der Neutralisation der tert. Amingruppen im allgemeinen keine zur Dispergierbarkeit der Polymeren erforderlichen ionischen Zentren vorliegen, muss im letztgenannten Fall der vor der Neutralisation liegende Dispergiervorgang unter Mitverwendung von Hilfslösungsmitteln wie z.B. Aceton oder unter Anwendung von Mischaggregaten erfolgen, durch deren Mischwirkung das an sich noch nicht dispergierbare Polymere im dispersen Zustand gehalten wird. Grundsätzlich ist es, wie bereits dargelegt, auch möglich, die Neutralisation der tert. Aminogruppen vor oder auch während des Aufbaus des Makromoleküls durchzuführen, d.h. im erstgenannten Fall bereits bei der Synthese der Polymeren durch Neutralisation von tert. Aminstickstoffatomen mit erfindungswesentlichen Säuren erhaltene Ammoniumgruppen aufweisende Aufbaukomponenten einzusetzen.

Das Molekulargewicht der in den erfindungsgemässen Dispersionen vorliegenden Polymeren wird in an sich bekannter Weise durch geeignete Wahl der Ausgangsmaterialien, sowie deren Mengenverhältnisse bestimmt.

Die Überführung der Polymeren in eine wässrige Dispersion kann mit oder auch ohne Zuhilfenahme eines Hilfslösungsmittels in an sich bekannter Weise erfolgen. Geeignete Hilfslösungsmittel sind vorzugsweise mit Wasser mischbare und bei Normaldruck unterhalb 100° C siedende Lösungsmittel, die unter den Bedingungen des erfindungsgemässen Verfahrens inert sind. Typische Beispiele für derartige Lösungsmittel sind Aceton, Methyläthylketon oder tert. Butanol.

Es ist im Prinzip auch möglich, in die Polymeren weitere hydrophile Zentren einzubauen. Hierzu gehören insbesondere innerhalb von Polyäthersegmenten eingebaute Äthylenoxideinheiten oder kationische Zentren, die nicht dem erfindungsgemässen Prinzip entsprechen, im Temperaturbereich von 20 bis 200° C ihren Ionencharakter zu verlieren. Der Einbau derartiger hydrophiler Zentren wird beispielsweise in den oben bei der Würdigung des Standes der Technik genannten Literaturstellen offenbart. So kann beispielsweise der Einbau kationischer Zentren gemäss US-PS 3 479 310 und der Einbau von nichtionischen hydrophilen Zentren gemäss US-PS 3 920 598 oder US-PS 3 905 929 bzw. gemäss DE-OS 2 555 534 erfolgen. Derartige hydrophile Zentren dürfen selbstverständlich nicht in einer Menge eingesetzt werden, die allein zur Gewährleistung der Dispergierbarkeit der Polymeren ausreicht, da dies dem

Prinzip der vorliegenden Erfindung der Herstellung von hydrophoben Kunststoffen durch Wärmebehandlung der dispergierten Polymeren widersprechen würde. Im allgemeinen sollte daher in den in den erfindungsgemässen Dispersionen vorliegenden Polymeren innerhalb von Polyätherketten angeordnete Äthylenoxid-segmente in einer Menge von höchstens 5 Gew.-% und thermisch nicht zersetzbare kationische Zentren in einer Menge von höchstens 7 Milliäquivalenten pro 100g Feststoff vorliegen. Vorzugsweise wird auf den Einbau derartiger, thermisch resistenter hydrophiler Zentren verzichtet.

Bei den erfindungswesentlichen Säuren handelt es sich um organische Säuren, die mit den tert. Aminogruppen zur Ammoniumsalzbildung befähigt sind, und die beim Lagern bzw. Erhitzen der in den erfindungsgemässen Dispersionen vorliegenden Polymeren nach Entfernung des Wassers in einem Temperaturbereich von 20 bis 200° C, vorzugsweise 50 bis 150° C und insbesondere 50 bis 120° C ohne Abspaltung korrodierend wirkender Substanzen unter Rückbildung der tert. Aminogruppen aus den Ammoniumgruppen ihren Säurecharakter verlieren. Es handelt sich hierbei um

A) solche organischen Carbonsäuren, welche in Abwesenheit von Wasser unter den genannten Temperaturbedingungen unter Kohlendioxidabspaltung ihren Säurecharakter verlieren oder um

B) organische Säuren, insbesondere Carbon- oder Sulfonsäuren, welche in Abwesenheit von Wasser unter den genannten Temperaturbedingungen unter intramolekularer Ringbildung ihren Säurecharakter verlieren.

Zu den Verbindungen der Gruppe A gehören solche der Formeln

1. 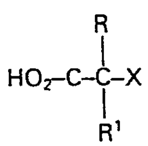

2. 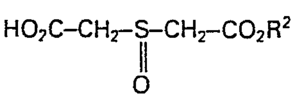

3. $R^2O_2C-CO_2H$

zu Säuren der Gruppe B gehören solche der Formeln

1. 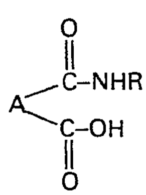

2. 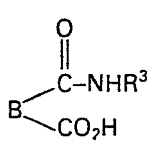 oder

3. 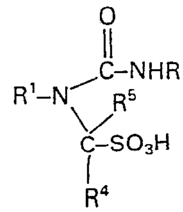

wobei in diesen Formeln

R, $R^1$, $R^4$ und $R^5$ für gleiche oder verschiedene Reste stehen und Wasserstoff, eine gegebenenfalls Halogen- oder Hydroxylsubstituenten aufweisenden Alkylrest mit 1 bis 4 Kohlenstoffatomen oder einen gegebenenfalls derartige Substituenten aufweisenden Arylrest mit 6 bis 10 Kohlenstoffatomen bedeuten,

$R^2$ für einen Alkylrest mit 1 bis 4 Kohlenstoffatomen steht,

$R^3$ für einen gegebenenfalls Halogen- oder Hydroxylsubstituenten aufweisenden Alkylrest mit 1 bis 4 Kohlenstoffatomen oder einen gegebenenfalls derartige Substituenten aufweisenden Phenylrest steht,

X für $-NO_2$, $-CN$ oder $-CO-R^6$ steht,

$R^6$ für $R^3$, $-N(R)R^1$, $-CH_2-CO_2H$ oder $-OR^3$ steht,

A für eine 2 oder 3 Kohlenstoffatome aufweisende, gegebenenfalls Hydroxylsubstituenten aufweisende Brücke steht, welche einen Alkylrest darstellt oder Teil eines gegebenenfalls Hydroxylsubstituenten aufweisenden aromatischen Ringsystems mit 6 bis 10 Kohlenstoffatomen oder Teil eines gegebenenfalls olefinisch ungesättigten cycloaliphatischen Ringsystems mit 5 bis 12 Kohlenstoffatomen sein kann, oder für $-CH_2-Z-CH_2-$ steht, wobei Z Sauerstoff oder Schwefel bedeuten kann,

B für –D–Y– steht, wobei

D für eine 1 bis 4 Kohlenstoffatome aufweisende, gegebenenfalls Hydroxylsubstituenten aufweisende Brücke steht, die auch Teil eines gegebenenfalls Hydroxylsubstituenten aufweisenden aromatischen Ringsystems mit 6 bis 10 Kohlenstoffatomen oder Teil eines gegebenenfalls olefinisch ungesättigten cycloaliphatischen Ringsystems mit 5 bis 12 Kohlenstoffatomen sein kann, und

Y für –NR–, –O– oder –S– steht.

Vorzugsweise haben die einzelnen Reste in den obengenannten Formeln folgende Bedeutung:

R, $R^1$, $R^4$ und $R^5$: Wasserstoff oder Methyl;

$R^2$: Alkylrest mit 1 bis 4 Kohlenstoffatomen;

$R^3$: Alkylrest mit 1 bis 4 Kohlenstoffatomen oder einen Phenylrest;

X: –CN, Benzoyl oder Äthoxycarbonyl;

A: Dimethylen- oder Trimethylenrest;

B: –D–Y,

D: $-CH_2-$ oder $-CH_2-CH_2-$ und

Y: –NH– oder –O–

In der Formel B 2) ist im übrigen die Brücke B stets so angeordnet, dass Y mit der Amidgruppe verknüpft ist.

Typische Vertreter der Säuren A 1) sind beispielsweise Nitroessigsäure, Cyanessigsäure, Acetondicarbonsäure, Acetessigsäure, Malonsäuremethylhalbester, Malonsäurehydroxyäthylhalbamid oder Benzoylessigsäure. Typische Vertreter von Säuren A 2) sind beispielsweise die der genannten Formel entsprechenden Methyl- oder Äthylhalbester.

Typische Vertreter von Säuren A 3) sind beispielsweise die Methyl- bzw. Äthylester der Oxalsäure.

Von den Säuren der Gruppe A) sind Cyanessigsäure, Benzoylessigsäure und 2-(Äthoxycarbonyl)-essigsäure besonders bevorzugt.

Typische Säuren der Gruppe B 1) sind solche der Formeln

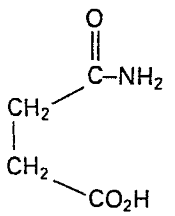

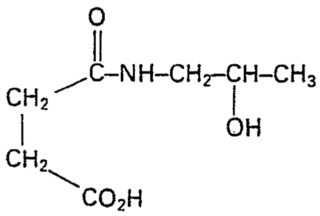

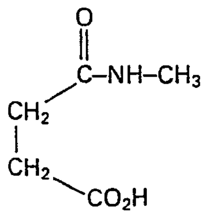

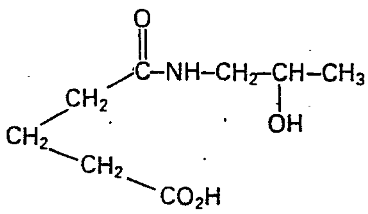

Typische Säuren der Gruppe B 2) sind solche der Formeln

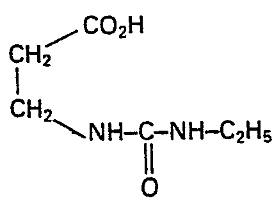

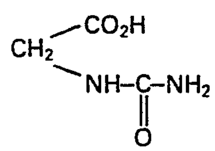

Typische Säuren der Gruppe B 3) sind solche der Formeln

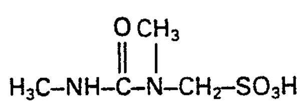

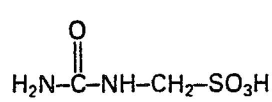

Unter den Säuren der Gruppe B ist das soeben genannte Kondensationsprodukt aus N,N-Dimethylharnstoff und Hydroxymethansulfonsäure besonders bevorzugt. Zur Neutralisation der tert. Aminstickstoff aufweisenden Polymeren mit den erfindungswesentlichen Säuren werden die Reaktionspartner in organischer Phase vor dem Dispergiervorgang gegebenenfalls unter Mitverwendung eines der oben beispielhaft genannten Hilfslösungsmittel oder aber vorzugsweise dergestalt zusammengebracht, dass das tert. Aminstickstoff aufweisende Polymere mit einer wässrigen Lösung der erfindungswesentlichen Säure unter gleichzeitigem Dispergieren bzw. Auflösen des Polymeren vermischt wird, wobei auch in diesem Falle ein Hilfslösungsmittel der oben beispielhaft genannten Art mitverwendet werden kann.

Der Gehalt an erfindungsgemässen kationischen Gruppen im Feststoff sollte 2 bis 200 Milliäquivalenten pro 100 g Feststoff, bevorzugt 8 bis 50 Milliäquivalenten pro 100 g Feststoff und ganz besonders bevorzugt zwischen 8 und 30 Milliäquivalenten pro 100 g Feststoff liegen. Bei Vorliegen von nur sehr geringen Mengen an erfindungsgemässen Ammoniumgruppen (unter 8 Milliäquivalenten pro 100 g) empfiehlt sich der gleichzeitige Einbau der obengenannten, nicht erfindungswesentlichen hydrophilen Zentren bzw. die Mitverwendung von externen Emulgatoren.

Der Feststoff der Dispersionen liegt stets unter 60 Gew.-%, bevorzugt zwischen 15 und 50 Gew.-%.

Die wässrigen Dispersionen können auf die verschiedensten Arten modifiziert oder nachträglich vernetzt werden. So gelangt man beispielsweise durch Zugabe von Isocyanaten bevorzugt Diisocyanaten in die wässrige Dispersion gemäss der Lehre der deutschen Patentanmeldung P 27 08 442 zu härteren, harnstoffumhüllten Polymeren. Zur Vernetzung der Polymeren werden häufig z. B. NCO-Pröpolymere, Formaldehyd, Formaldehydabspalter oder Melaminharze eingesetzt. Da der pH-Wert der erfindungsgemäss hergestellten Dispersion in der Regel unter pH 7 liegt, wird eine solche Formaldehyd-Vernetzung begünstigt. Dies ist besonders beim Applizieren auf Substraten von Vorteil, die thermisch nur begrenzt beansprucht werden dürfen, wie z. B. Leder.

Es ist selbstverständlich auch möglich, dem Oligomer oder Polymer vor, während oder nach dem Dispergieren externe Emulgatoren zuzusetzen. Dies kommt aber in der Regel nur dann in Betracht, wenn mit einem solchen Zusatz Vorteile für die spätere Verarbeitung erzielt werden können. Geeignete Emulgatoren sind z. B. äthoxylierte Alkylphenole mit einem mittleren Molekulargewicht von 400–10 000.

Die wässrigen Dispersionen können auch geringe Mengen – bis zu 6 Gew.-% auf Dispersion bezogen – an organischen Lösungsmitteln der oben beispielhaft genannten Art enthalten. Diese Lösungsmittelzusätze können beispielsweise den Verlauf einer Dispersion auf dem Substrat positiv beeinflussen.

Zu den wässrigen Dispersionen können auch die verschiedensten Agenzien zugemischt werden, wie z. B. Pigmente, Verdickungsmittel, Verlaufmittel, Griffmittel, Füllstoffe, Weichmacher u. a. Diese Zusätze sind vom Anwendungsgebiet der Dispersion abhängig.

Von besonderem Interesse sind auch Abmischungen von verschiedenen Polymerdispersionen, z. B. Polyurethane unterschiedlicher Zusammensetzung miteinander oder mit Acrylaten u. dgl., oder Polyacrylate mit Polyestern. Prinzipiell sind alle Mischvariationen praktikabel, wobei die einzelnen Dispersionen nicht alle den erfindungsgemässen Kriterien entsprechen müssen.

Die erfindungsgemässen Dispersionen eignen sich hervorragend zur Herstellung von hydrophoben, d.h. wasserresistenten Überzügen, Beschichtungen und Verklebungen, da die die Hydrophilie bedingenden Gruppen durch eine einfache Wärmebehandlung ihre hydrophilen Eigenschaften weitgehend verlieren. Bei der erfindungsgemässen Verwendung der erfindungsgemässen Dispersionen werden die nach der Applikation der Dispersionen vorliegenden Überzüge, Beschichtungen oder Klebstoffschichten unter Verdunsten bzw. Verdampfen des Wassers in einem Temperaturbereich von 20 bis 200° C, vorzugsweise 50 bis 150° C und insbesondere 50 bis 120° C gelagert bzw. erhitzt, wobei sich im allgemeinen nach Entfernung des Wassers ein Lagern bzw. Nachheizen innerhalb der genannten Temperaturbereiche anschliesst. Oft genügt ein derartiges Lagern bzw. Nachheizen im Temperaturbereich zwischen 20 und 70° C, insbesondere 50 und 70° C, um ein völlig hydrophobes Polymeres zu erhalten. Dies ist insofern überraschend, als die dispergierten bzw. gelösten Polymeren in Gegenwart des als kontinuierliche Phase dienenden Wassers äusserst hitzeresistent sind und selbst ein mehrstündiges Erhitzen auf 90 bis 100° C unverändert überstehen.

Auf Grund dieser interessanten Eigenschaften ist der Anwendungsbereich dieser polymeren Dispersionen besonders breit. Beispielhaft seien hier als Anwendungsgebiete die Beschichtung der unterschiedlichsten Materialien wie z.B. Textilien, Leder, Gummi, Kunststoffe, wie z.B. PVC, Glas, Metalle, Papier oder Holz genannt, wobei sie u.a. als Lacke oder auch Klebstoffe eingesetzt werden. Weitere Verwendungsmöglichkeiten liegen z.B. auf den Gebieten Glasfaserschichten oder Dispergierhilfsmittel oder als Bindemittel für z.B. Kork- oder Holzmehl, Glasfasern, Asbest, papierartige Materialien, Plastik- oder Gummiabfälle und keramische Materialien. Selbstverständlich können sie auch Verbundmittel für Glas oder Kunststoffe darstellen. Auch können sie nicht nur kompakt, sondern auch in geschäumter Form zum Einsatz gelangen.

Die in den Beispielen angegebenen Mengen sind Gewichtsanteile. Als vergleichender Test wurde das Nassreiben von auf Glasplatten aufgezogenen Filmen gewählt. Die Nassreibungen wurden mit einem nassen Filz auf einer Satra-Maschine durchgeführt unter einer Belastung von 2,5kg und ca. 150U/Min. Die Satra Maschine ist unter der Bezeichnung Satra Finish Rub Fastness Tester STM 102 im Handel. Der Test wird durchgeführt in Anlehnung an die Testbeschreibung in Satra «Physical test method», PM.8 Appendix W.

Beispiel 1

Ansatz:

| | |
|---|---|
| 400,0g | Hexandiol-Neopentylglykol-Adipat (OHZ66) (PE) |
| 67,1g | Hexamethylendiisocyanat (H) |
| 21,0g | N-Methyl-bis(3-amino-propyl)amin «Amingemisch» |
| 1,0g | Hydrazin-Hydrat «Amingemisch» |
| 24,5g | Halbamid aus einem Mol Bernsteinsäure und einem Mol 2-Hydroxypropylamin-1 |
| 900 g | entsalztes Wasser |
| 1300 g | Aceton |

Durchführung:

Der Polyester (PE) wird bei 110° C 30 Minuten unter Rühren im Wasserstrahlvakuum entwässert und auf 80° C abgekühlt. Es wird das Diisocyanat (H) zugegeben und solange bei 80 bis 90° C gerührt (ca. 3h) bis ein NCO-Wert von 2,95% gefunden wird. Es wird auf 50° C abgekühlt und das Aceton zugegeben. Wenn die Lösung homogen ist, wird das Amingemisch zugegeben und solange bei 50° C gerührt, bis kein Isocyanat mehr gefunden wird (ca. 90 Minuten). Anschliessend wird das Amid zusammen mit dem gesamten Dispergierwasser langsam zugegeben. Das Aceton wird sofort abdestilliert. Es entsteht eine feinteilige Dispersion, die im durchscheinenden Licht einen Tyndall-Effekt aufweist.

Die Viskosität (4mm Fordbecher-Düse) beträgt bei einem Feststoff von 29% 23,1 Sekunden. Der pH-Wert beträgt 7. Der dispergierte Feststoff enthält 27,3 Milliäquivalente/100g Feststoff an quaternären Stickstoffatomen. Der auf eine Glasplatte gezogen bei 120° C ausgeheizte Film überdauert 200 Nassreibungen mit obengenannter Maschine.

Vergleichsbeispiel 1

Analog Beispiel 1, aber anstatt 24,5g des Amids wurden 16,1g 85%ige Phosphorsäure verwandt.

Man erhält eine feinteilige, zentrifugenstabile (3600U/Min. 15 Minuten) Dispersion mit einem Feststoff von 22,4% und einem pH-Wert von 6,9. Der auf eine Glasplatte gezogene, bei 120° C ausgeheizte Film überdauerte 22 Nassreibungen mit oben beschriebener Maschine.

Beispiel 2

Ansatz:

| | |
|---|---|
| 400,0g | Polypropylenoxid-polyäther gestartet aus Propylenglykol (OHZ65) |
| 62,6g | Toluylendiisocyanat (65% 2,4- und 35% 2,6-Isomeren) |
| 23,2g | Methyl-bis-(3-aminopropyl)amin |
| 12,6g | Cyanessigsäure in |
| 830,0g | entsalztem Wasser |
| 600,0g | Aceton |

Durchführung: vgl. Beispiel 1

Man erhält eine feinteilige Dispersion, die im durchscheinenden Licht einen Tyndalleffekt zeigt. Der Feststoff beträgt 37,6% und der pH-Wert 6.

Die aus dieser Dispersion bei 130° C hergestellten Filme überstehen ca. 100 Nassreibungen mit oben beschriebener Maschine. Ein Vergleichsprodukt, das aus einer Dispersion hergestellt wurde, die anstatt Cyanessigsäure eine äquimolare Menge o-Phosphorsäure enthält, überstand nur 25 Nassreibungen unter identischen Bedingungen.

Beispiel 3

Ansatz:

342,0 g Polypropylenglykoläther auf Basis Bisphenol A (OHZ 197)
47,6 g N-Methyldiäthanolamin
210,0 g Hexamethylendiisocyanat
43,5 g Butanonoxim

Durchführung:

Der Polyäther wird im Vakuum unter Rühren 30 Minuten bei 110° C entwässert. Bei 80° C wird das Amin zugegeben. Nach intensiver Vermischung wird bei 80° C das Diisocyanat zugegeben. Es wird solange bei 80° C gerührt (ca. 30 Minuten) bis ein NCO-Gehalt von 3,5% erreicht ist. Es wird das Butanonoxim zugegeben und verrührt, bis die Schmelze kein Isocyanat mehr enthält.

Die heisse Schmelze wird auf eine Platte gegossen und nach dem Erkalten mechanisch zerkleinert. Der Schmelzbereich des Feststoffes liegt bei 50–60° C.

3 a) 30 g des Feststoffes werden auf einem Magnetrührer in 70 g Wasser bei Raumtemperatur eingetragen. Das Wasser enthält 1,56 g 85%ige Phosphorsäure. Man erhält eine zentrifugenstabile Dispersion mit einer Fordbecherviskosität (4 mm Düse) von 22 Sekunden und einem pH-Wert von 2. Der auf eine Glasplatte gezogene Film wurde bei 140° C ausgeheizt und überdauerte 25 Nassreibungen mit oben beschriebener Maschine nach Satra.

3 b) 30 g des Feststoffes werden auf einem Magnetrührer in 70 g Wasser bei Raumtemperatur eingetragen. Das Wasser enthält 1,15 g Cyanessigsäure. Man erhält eine feinteilige, viskose Dispersion mit einem pH-Wert von 3. Der auf eine Glasplatte gezogene Film wurde bei 140° C ausgeheizt und überdauerte 60 Nassreibungen mit oben beschriebener Maschine nach Satra.

Beispiel 4:

Ansatz:

700 g Polypropylenoxid-polyäther gestartet auf Propylenglykol (OHZ 56)
212 g Phthalsäure-Adipinsäure-Äthylenglykol-Polyester (OHZ 64)
722 g Phthalsäure-Äthylenglykol-Polyester (OHZ 56)
235 g Hexamethylendiisocyanat
153 g Toluylendiisocyanat (65% 2,4- und 35% 2,6-Isomeres)
134 g N-Methyldiäthanolamin
8,1 g Hydrazin-Hydrat
26,3 g Isophorondiamin
950 g Aceton

Durchführung:

Die drei Polyester und Polyäther werden gemischt und 30 Minuten bei 110° C in Vakuum unter Rühren entwässert. Bei 90° C werden die beiden Isocyanate zugegeben. Bei 90° C wird die Schmelze bis zu einem NCO-Gehalt von 6,2% (ca. 1 Stunde) verrührt. Anschliessend werden 395 g Aceton zugegeben und verrührt bis eine homogene Lösung vorliegt. Dann wird N-Methyldiäthanolamin zugegeben und bis auf einen NCO-Gehalt von 1,04 verrührt. Anschliessend werden 555 g Aceton zugegeben und Hydrazin-Hydrat und Isophorondiamin eingerührt. Wenn die Lösung NCO-frei ist, wird sie auf folgende Versuche aufgeteilt und weiter verarbeitet (der Feststoff der Lösung beträgt 71,5%):

| Nr. | Säure/Quaternierungsagenz. | | Dispersion | | | | | | |
|---|---|---|---|---|---|---|---|---|---|
| | Formel | g. | g. Prep. Lösung | g. $H_2O$ | % Festst. | DIN Sek.* | pil | m-Äquiv.-Kat.** | Reibungen *** |
| 1. | Dimethylsulfat (Vergleich) | 4,5 | 100 | 305 | 22,8 | 25 | 5 | 50 | 30 |
| 2. | Phosphorsäure (85%iger) (Vergleich) | 4,12 | 100 | 265 | 24,3 | 27,2 | 5 | 50 | 90 |
| 3. | Cyanessigsäure | 3,5 | 100 | 265 | 25,3 | >60 | 6 | 50 | 300 |
| 4. | Nitroessigsäure | 3,75 | 100 | 180 | 33,1 | 18,9 | 5 | 50 | 263 |
| 5. | $H_3C-NH-CO-N(CH_3)-CH_2-So_3H$ 46%ig in $H_2O$ | 14,06 | 100 | 210 | 30,5 | – | 6 | 50 | >600 |
| 6. | $H_2N-CO-NH-CH_2-SO_3H$ 22%ige Lösung in $H_2O$ (SZ 43,6) | 46,0 | 100 | 175 | 29,3 | – | 6 | 50 | 315 |
| 7. | $H_3C-CH(OH)-CH_2-NH-CO-(CH_2)_2-CO_2H$ | 6,25 | 100 | 180 | 33,8 | – | 5 | 50 | 194 |
| 8. | $H_3C-CH(OH)-CH_2-NH-CO-(CH_2)_3CO_2H$ | 6,75 | 100 | 280 | 23,5 | 25,6 | 6 | 50 | 187 |
| 9. | $H_5C_2-O_2-C-CH_2-COOH$ (SZ 418) | 4,80 | 100 | 300 | 21,9 | 22,5 | 5 | 50 | 203 |
| 10. | $H_5C_2-O_2C-COOH$ (SZ 407) | 4,92 | 100 | 300 | 23,8 | – | 5 | 50 | 192 |
| 11. | 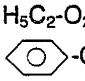-CO-CH₂-COOH (SZ 297) | 6,75 | 100 | 570 | 13,0 | 25,8 | 7 | 50 | 300 |
| 12. | $C_2H_5-NHCO-NH-(CH_2)_2CO_2H$ | 7,24 | 100 | 265 | 25,6 | – | 7 | 50 | 160 |
| 13. | $H_3C-O_2C-CH_2-S-CH_2-CO_2H$ (Vergleich) | 5,86 | 100 | 380 | 18,2 | 17 | 5 | 50 | 65 |

| Nr. | Säure/Quaternierungsagenz. Formel | g. | Dispersion g. Prep. Lösung | g. $H_2O$ | % Festst. | DIN Sek.* | pil | m-Äquiv.-Kat.** | Reibungen *** |
|---|---|---|---|---|---|---|---|---|---|
| 13.a | $H_3O_2C$-$CH_2$-SO-$CH_2$-$CO_2H$ | 6,44 | 100 | 380 | 18,3 | 22 | 5 | 50 | 150 |
| 14. | Acetondicarbonsäure | 5,22 | 100 | 200 | 29,7 | 23,3 | 7 | 50 | 580 |
| 15. | $H_2N$-CO-NH-$CH_2$-$CO_2H$ | 4,22 | 100 | 345 | 19,9 | – | 6 | 50 | 172 |

* Fordbecher-Viskosität (4 mm Düse) (DIN 53211)
** m-Äquivalente Kationen/100 g Feststoff
*** Nassreibugen nach Satra der bei 110° ausgeheizten Filme

Beispiel 5

Ansatz:

500 g entsalztes Wasser
15,7 g Umsetzungsprodukt aus Methacrylsäure und N,N-Dimethylaminoäthanol
13,6 g Cyanessigsäure
156,2 g Methacrylsäuremethylester

Starter:

0,3 g Ammoniumperoxodisulfat
0,17 g Natriumpyrosulfit
5,0 g Wasser.

Durchführung:

a) Alle Komponenten werden bei Raumtemperatur zusammengegeben und innerhalb von 3,5 Stunden auf 60° C aufgeheizt. Bei dieser Temperatur wird 2 Stunden verrührt. Die erhaltene Dispersion hat einen Feststoff von 27% und eine Fordbecherviskosität (4mm Düse) von 23 Sekunden. Der pH-Wert beträgt 3.

Der auf eine Glasplatte aufgezogene Film wurde bei 110° C 30 Minuten ausgeheizt. Nach dem Abkühlen überdauerte er 210 Nassreibungen mit oben beschriebener Satra-Maschine.

b) Eine analog hergestellte Dispersion, die statt mit Cyanessigsäure mit 18,4g (85%iger) Phosphorsäure hergestellt wurde, hatte bei einem Feststoff von 27% eine Fordbecherviskosität (4mm Düse) von 14 Sekunden und ebenfalls einen pH-Wert von 3. Der auf der Glasplatte aufgezogene Film überdauerte nach dem Trocknen bei 110° C aber nur 110 Nassreibungen mit oben beschriebener Maschine.

Beispiel 6

Ansatz:

| | | |
|---|---|---|
| 77,6 g | Terephthalsäuredimethylester | A |
| 28,8 g | Maleinsäuredimethylester | A |
| 36,8 g | Hexahydrophthalsäuredimethylester | A |
| 29,8 g | Triäthylamin | A |
| 34,1 g | Äthylenglykol | A |
| 13,8 g | $H_3PO_4$ (85% in Wasser | |
| 595 g | entsalztes Wasser | |

Durchführung:

Die Ausgangskomponente A werden unter Stickstoff bei 140° C solange erhitzt, bis kein Methanol mehr abdestilliert. Anschliessend wird unter Vakuum von 10 Torr solange bei 140° C weitergerührt, bis eine OH-Zahl von 103 gefunden wird. Danach wird in die auf 80° C abgekühlte Schmelze die Phosphorsäure eingerührt. Nach 5 Minuten wird die Schmelze mit 50° C warmen Wasser dispergiert.

Man erhält eine feinteilige Dispersion, die bei einem Feststoff von 20 Gew.-% eine Fordbecherauslaufzeit (4mm Düse) von 10 Sekunden hat. Der pH-Wert beträgt 4. Der bei 120° C auf eine Glasplatte aufgetrocknete Film überdauert mit obengenanntem Gerät bei einer Belastung von 355g 5 Nassreibungen.

Bei einer analog hergestellten Dispersion, bei der die Phosphorsäure durch die äquimolekulare Menge Cyanessigsäure ersetzt ist, findet man bei einem Feststoff von 20% eine Fordbecherauslaufzeit (4mm Düse) von 13 Sekunden. Der bei 120° C auf eine Glasplatte aufgetrocknete Film überdauert mit obengenannter Satra-Maschine bei einer Belastung von 355g 138 Nassreibungen.

**Patentansprüche**

1. Wässrige Dispersionen von 2 bis 200 Milliäquivalente pro 100g Feststoff an eingebauten, durch Neutralisation von eingebauten tertiären Stickstoffatomen mit organischen Säuren erhaltenen, Ammoniumgruppen aufweisenden Oligo- oder Polymerisaten, -kondensaten oder -additionsprodukten, dadurch gekennzeichnet, dass die den Ammoniumgruppen zugrundeliegende organische Säure nach Entfernung des Wassers in einem Temperaturbereich von 20–200° C ihren Säurecharakter verliert und ausgewählt ist aus der Gruppe, bestehend aus den Säuren der Formeln

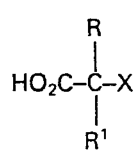

$HO_2C$–$CO_2R^2$

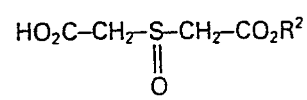

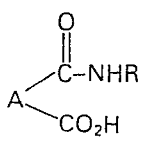 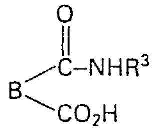 oder 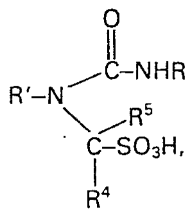

wobei

R, $R^1$, $R^4$ und $R^5$ für gleiche oder verschiedene Reste stehen und Wasserstoff, einen gegebenenfalls Halogen- oder Hydroxylsubstituenten aufweisenden Alkylrest mit 1 bis 4 Kohlenstoffatomen oder einen gegebenenfalls derartige Substituenten aufweisenden Arylrest mit 6 bis 10 Kohlenstoffatomen bedeuten,

$R^2$ für einen Alkylrest mit 1 bis 4 Kohlenstoffatomen steht,

$R^3$ für einen gegebenenfalls Halogen- oder Hydroxylsubstituenten aufweisenden Alkylrest mit 1 bis 4 Kohlenstoffatomen oder einen gegebenenfalls derartige Substituenten aufweisenden Phenylrest steht,

X für $-NO_2$, $-CN$ oder $-CO-R^6$ steht,

$R^6$ für $R^3$ $-N(R)R^1$, $-CH_2-CO_2H$ oder $-OR^3$ steht,

A für eine 2 oder 3 Kohlenstoffatome aufweisende, gegebenenfalls Hydroxylsubstituenten aufweisende Brücke steht, welche einen Alkylenrest darstellt oder Teil eines gegebenenfalls Hydroxylsubstituenten aufweisenden aromatischen Ringsystems mit 6 bis 10 Kohlenstoffatomen oder Teil eines gegebenenfalls olefinisch ungesättigten cycloaliphatischen Ringsystems mit 5 bis 12 Kohlenstoffatomen sein kann, oder für $-CH_2-Z-CH_2-$ steht, wobei Z Sauerstoff oder Schwefel bedeuten kann,

B für –D–Y– steht, wobei

D für eine 1 bis 4 Kohlenstoffatome aufweisende, gegebenenfalls Hydroxylsubstituenten aufweisende Brücke steht, die auch Teil eines gegebenenfalls Hydroxylsubstituenten aufweisenden aromatischen Ringsystems oder Teil eines gegebenenfalls olefinisch ungesättigten cycloaliphatischen Ringsystems mit 5 bis 12 Kohlenstoffatomen sein kann, und

Y für –NR–, –O– oder –S– steht.

2. Wässrige Dispersionen gemäss Anspruch 1, dadurch gekennzeichnet, dass es sich um wässrige Dispersionen von Oligo- oder Poly-urethanen einer überwiegend linearen Molekularstruktur handelt.

3. Verfahren zur Herstellung von wässrigen Dispersionen gemäss Anspruch 1 durch an sich bekannten Aufbau oligomerer oder polymerer Kunststoffe durch Polymerisation, Polykondensation oder Polyaddition niedermolekularer Aufbaukomponenten unter Mitverwendung von tertiären Aminstickstoff aufweisenden und/oder durch Neutralisation von eingebauten tertiären Aminogruppen mit organischen Säuren erhaltene Ammoniumgruppen aufweisenden Aufbaukomponenten, zumindest teilweiser Neutralisation der gegebenenfalls vorliegenden tertiären Aminogruppen mit einer organischen Säure, wobei Art und Menge der tertiäre Aminogruppen und/oder Ammoniumgruppen aufweisenden Aufbaukomponenten, sowie der Neutralisationsgrad so gewählt werden, dass in den entstehenden Oligomeren bzw. Polymeren 2 bis 200 Milliäquivalente pro 100 g Feststoff Ammoniumgruppen vorliegen, und an sich bekannte Überführung der Oligomeren oder Polymeren in eine wässrige Dispersion während oder im Anschluss an die zum Oligomeren oder Polymeren führende Aufbaureaktion, dadurch gekennzeichnet, dass man zur Neutralisation der tertiären Aminogruppen und/oder zur Herstellung der Ammoniumgruppen aufweisenden Aufbaukomponenten organische Säuren gemäss Anspruch 1 verwendet.

4. Verfahren zur Herstellung von wässrigen Dispersionen von Oligo- oder Polyurethanen mit überwiegend linearer Molekularstruktur durch Umsetzung von organischen Diisocyanaten mit im Sinne der Isocyanat-Polyadditionsreaktion difunktionellen Aufbaukomponenten mit gegenüber Isocyanatgruppen reaktionsfähigen Gruppen, gegebenenfalls unter Mitverwendung geringer Mengen an, im Sinne der Isocyanat-Polyadditionsreaktion mono- oder höher als difunktionellen Aufbaukomponenten, sowie unter Mitverwendung von Ammoniumgruppen und/oder tertiäre Aminogruppen aufweisenden Aufbaukomponenten mit gegenüber Isocyanatgruppen reaktionsfähigen Wasserstoffatomen, zumindest teilweiser Neutralisation der gegebenenfalls vorliegenden tertiären Aminogruppen, wobei Art und Menge der tertiären Aminogruppen und/oder Ammoniumgruppen aufweisenden Aufbaukomponenten, sowie der Neutralisationsgrad so gewählt werden, dass in den entstehenden Oligo- oder Polyurethanen 2 bis 200 Milliäquivalente pro 100 g Feststoff an Ammoniumgruppen vorliegen, an sich bekannte Überführung der so erhaltenen ionischen Oligo- oder Polyurethane in eine wässrige Dispersion während und/oder im Anschluss an die zum Oligo- oder Polyurethan führende Aufbaureaktion, dadurch gekennzeichnet, dass man zur Neutralisation der Aminogruppen organische Säuren gemäss Anspruch 1 verwendet, und/oder man als Ammoniumgruppen aufweisende Aufbaukomponenten solche verwendet, die durch Neutralisation von tertiären Aminogruppen aufweisenden Aufbaukomponenten mit derartigen Säuren erhalten worden sind.

5. Verwendung der wässrigen Dispersion gemäss Anspruch 1 und 2 zur Herstllung von wasserresistenten Überzügen, Beschichtungen oder Verklebungen auf bzw. von beliebigen Substraten, dadurch gekennzeichnet, dass man die Dispersionen nach erfolgter Formgebung während und/oder nach dem Entfernen des Wassers durch Verdunsten oder Verdampfen einer Lagerung oder Wärmebehandlung im Temperaturbereich von 20 bis 200° C unterzieht.

## Claims

1. Aqueous dispersions of oligomers or polymers, oligo- or polycondensates or oligo- or polyaddition products containing from 2 to 200 milliequivalents per 100 g of solids of incorporated

ammonium groups obtained by neutralising incorporated tertiary nitrogen atoms with organic acids, characterised in that the organic acid on which the ammonium groups are based loses its acid character after removal of the water in a temperature range from 20 to 200° C and is selected from the group consisting of the acids of the formulae

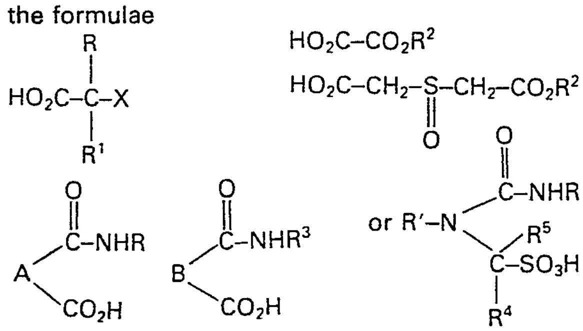

in which:

R, $R^1$, $R^4$ and $R^5$ which may be the same or different, represent hydrogen, a $C_1$-$C_4$-alkyl radical which may contain halogen or hydroxyl substituents or a $C_6$-$C_{10}$-aryl radical which may contain these same substituents,

$R^2$ represents a $C_1$-$C_4$-alkyl radical,

$R^3$ represents a $C_1$-$C_4$-alkyl radical which may contain halogen or hydroxyl substituents or a phenyl radical which may contain these same substituents,

X represents $-NO_2$, $-CN$ or $-CO-R^6$,

$R^6$ represents $R^3$, $-N(R)R^1$, $-CH_2-CO_2H$ or $-OR^3$,

A represents a $C_2$ or $C_3$, bridge which may be hydroxylsubstituted and which represents an alkylene radical or may be part of a $C_6$-$C_{10}$-aromatic ring system which may contain hydroxyl substituents or part of a cycloaliphatic ring system containing from 5 to 12 carbon atoms which may be olefinically unsaturated or represents $-CH_2-Z-CH_2-$ where Z may represent oxygen or sulphur,

B represents –D–Y– where

D represents a $C_1$-$C_4$ bridge which may be hydroxylsubstituted and which may be part of an aromatic ring system which may contain hydroxyl substituents or part of a cycloaliphatic ring system containing from 5 to 12 carbon atoms which may be olefinically unsaturated, and

Y represents –NR–, –O– or –S–.

2. Aqueous dispersions according to Claim 1, characterised in that they are aqueous dispersions of oligourethanes or polyurethanes having a predominantly linear molecular structure.

3. A process for producing the aqueous dispersions according to Claim 1 by the synthesis of oligomeric or polymeric plastics in known manner by the polymerisation, polycondensation or polyaddition of low molecular weight synthesis components using synthesis components containing tertiary amine nitrogen and/or ammonium groups obtained by neutralising incorporated tertiary amino groups with organic acids, at least partially neutralising the tertiary amino groups presents, if any, with an organic acid, the type and quantity of the synthesis components containing tertiary amino groups and/or ammonium groups and their degree of neutralisation being selected in such a way that the oligomers or polymers formed contain from 2 to 200 milliequivalents of ammonium groups per 100g of solids, and converting the oligomers or polymers in known manner into an aqueous dispersion during or after the synthesis reaction leading to the oligomer or polymer, characterised in that organic acids according to Claim 1 are used for neutralising the tertiary amino groups and/or for producing the synthesis components containing ammonium groups.

4. A process for the production of aqueous dispersions of oligourethanes or polyurethanes having a predominantly linear molecular structure by reacting organic diisocyanates with synthesis components difunctional in the context of the isocyanate-polyaddition reaction containing isocyanate-reactive groups, optionally together with small quantities of synthesis components monofunctional or higher than difunctional in the context of the isocyanatepolyaddition reaction, using synthesis components containing ammonium groups and/or tertiary amino groups and isocyanate-reactive hydrogen atoms, at least partially neutralising the tertiary amino groups present, if any, the type and quantity of synthesis components containing tertiary amino groups and/or ammonium groups and their degree of neutralisation being selected in such a way that the oligourethanes or polyurethanes formed contain from 2 to 200 milliequivalents of ammonium groups per 100g of solids, converting the ionic oligourethanes or polyurethanes thus obtaines in known manner into an aqueous dispersion during and/or after the synthesis reaction leading to the oligourethane or polyurethane, characterised in that the amino groups are neutralised with organic acids according to Claim 1 and/or the synthesis components containing ammonium groups used are obtained by neutralisation of synthesis components containing tertiary amino groups with acids of this type.

5. The use of the aqueous dispersions according to Claims 1 and 2 for the production of water-resistant coatings or bonds on substrates of any kind, characterised in that after shaping the dispersions are stored or heat-treated at temperatures in the range from 20 to 200° C during and/or after removal of the water by evaporation.

**Revendications**

1. Dispersions aqueuses d'oligomères, de polymères, d'oligocondensats, de polycondensats, de produits d'oligoaddition ou de polyaddition comportant de 2 à 200 milliéquivalents (par 100g de matières solides) de groupes d'ammonium, obtenus par neutralisation d'atomes d'azote tertiaires incorporés avec des acides organiques, caracterisées en ce que, après élimination de l'eau dans un intervalle de températures de 20 à 200° C, l'acide organique qui est à la base des groupes ammonium, perd son caractère acide et est choisi

parmi le groupe comprenant les acides répondant aux formules:

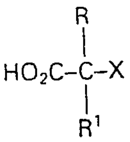

$HO_2C-CO_2R^2$

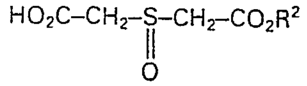

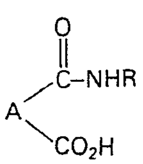

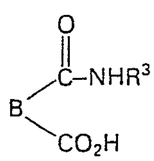

ou

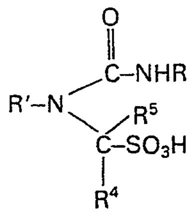

où

R, $R^1$, $R^4$ et $R^5$ représentent des radicaux identiques ou différents et sont choisis parmi un atome d'hydrogène, un groupe alkyle contenant 1 à 4 atomes de carbone et comportant éventuellement des substituants halogèno ou hydroxy, ou encore un groupe aryle contenant 6 à 10 atomes de carbone et comportant éventuellement des substituants de ce type,

$R^2$ représente un groupe alkyle contenant 1 à 4 atomes de carbone,

$R^3$ représente un groupe alkyle contenant 1 à 4 atomes de carbone et comportant éventuellement des substituants halogéno ou hydroxy, ou un groupe phényle comportant éventuellement des substituants de ce type,

X représente $-NO_2$, $-CN$ ou $-CO-R^6$,

$R^6$ représente $R^3$, $-N(R)R^1$, $-CH_2-CO_2H$ ou $-OR^3$,

A représente un pont contenant 2 ou 3 atomes de carbone et comportant éventuellement des substituants hydroxy, ce pont étant un groupe alkylène ou pouvant faire partie d'un système cyclique aromatique contenant 6 à 10 atomes de carbone et comportant éventuellement des substituants hydroxy, ou d'un système cyclique cycloaliphatique contenant 5 à 12 atomes de carbone et comportant éventuellement une insaturation oléfinique, ou encore un groupe $-CH_2-Z-CH_2-$, Z pouvant représenter un atome d'oxygène ou de soufre,

B représente $-D-Y-$,

D représente un pont contenant 1 à 4 atomes de carbone et comportant éventuellement des substituants hydroxy, ce pont pouvant également faire partie d'un système cyclique aromatique comportant éventuellement des substituants hydroxy, ou d'un système cyclique cycloaliphatique contenant 5 à 12 atomes de carbone et comportant éventuellement une insaturation oléfinique, et

Y représente $-NR-$, $-O-$ ou $-S-$.

2. Dispersions aqueuses suivant la revendication 1, caractérisées en ce qu'il s'agit de dispersions aqueuses d'oligo- ou de poly-uréthanes d'une structure moléculaire principalement linéaire.

3. Procédé de préparation de dispersions aqueuses suivant la revendication 1 par structuration (connue en soi) de matières synthétiques oligomères ou polymères par polymérisation, polycondensation ou polyaddition de composants structuraux de faible poids moléculaire en utilisant conjointement des composants structuraux comportant un atome d'azote amino tertiaire et/ou comportant des groupes ammonium obtenus par neutralisation de groupes amino tertiaires incorporés avec des acides organiques, neutralisation au moins partielle des groupes amino tertiaires éventuellement présents avec un acide organique, la nature et la quantité des composants structuraux comportant des groupes amino tertiaires et/ou des groupes ammonium, de même que le degré de neutralisation étant choisis de telle sorte qu'il y ait, dans les oligomères ou les polymères formés, 2 à 200 milliéquivalents de groupes ammonium par 100g de matière solide, ainsi que par transformation (connue en soi) des oligomères ou des polymères en une dispersion aqueuse pendant ou après la réaction de structuration conduisant aux oligomères ou aux polymères, caractérisé en ce que, pour la neutralisation des groupes amino tertiaires et/ou pour la préparation des composants structuraux comportant des groupes ammonium, on utilise des acides organiques suivant la revendication 1.

4. Procédé de préparation de dispersions aqueuses d'oligo- ou de polyuréthanes ayant une structure moléculaire principalement linéaire par réaction de diisocyanates organiques avec des composants structuraux difonctionnels dans le sens de la réaction de polyaddition d'isocyanates et comportant des groupes réactifs vis-à-vis des groupes isocyanate en utilisant éventuellement conjointement de faibles quantités de composants structuraux monofonctionnels ou plus que difonctionnels dans le sens de la réaction de polyaddition d'isocyanates, ainsi qu'en utilisant conjointement des composants structuraux comportant des groupes ammonium et/ou des groupes amino tertiaires et contenant des atomes d'hydrogène réactifs vis-à-vis des groupes isocyanate, avec neutralisation au moins partielle des groupes amino tertiaires éventuellement présents, la nature et la quantité des composants structuraux comportant des groupes amino tertiaires et/ou des groupes ammonium, de même que le degré de neutralisation étant choisis de telle sorte qu'il y ait, dans les oligo- ou polyuréthanes formés, 2 à 200 milliéquivalents de groupes ammonium par 100g de matières solides, ainsi que par transformation (connue en soi) des oligo- ou polyuréthanes ioniques ainsi obtenus en une dispersion aqueuse pendant et/ou après la réaction de structuration conduisant à l'oligo- ou au polyuréthane, caractérisé en ce que, pour la neutralisation des groupes amino, on utilise des acides organiques suivant la revendication 1 et/ou, comme composants structuraux comportant des groupes ammonium, ou utilise ceux qui sont obtenus par neutralisation de composants structuraux comportant des groupes amino tertiaires avec des acides de ce type.

5. Utilisation des dispersions aqueuses suivant les revendications 1 et 2 pour la formation de revêtements, d'enduits ou de collages résistant à l'eau sur n'importe quel substrat, ou pour la formation de n'importe quel substrat, caractérisée en ce que, après le façonnage, pendant et/ou après l'élimination de l'eau par volatilisation ou évaporation, on soumet les dispersions à une conservation ou à un traitement thermique à une température se situant dans l'intervalle allant de 20 à 200° C.